# EUROPÄISCHE PATENTSCHRIFT

(11) **EP 1 274 977 B1**
(45) Veröffentlichungstag und Bekanntmachung des Hinweises auf die Patenterteilung: **12.11.2008**
(21) Anmeldenummer: 01945005.5
(22) Anmeldetag: 14.04.2001
(51) Int. Cl.: G01M 17/02

(54) **VORRICHTUNG ZUR MESSUNG DER GLEICHFÖRMIGKEIT EINES FAHRZEUGREIFENS**
DEVICE FOR MEASURING THE UNIFORMITY OF A VEHICLE TIRE
DISPOSITIF POUR LA MESURE DE L'UNIFORMITE D'UN PNEU DE VEHICULE AUTOMOBILE

(30) Priorität: 20.04.2000 DE 10019565
(43) Veröffentlichungstag der Anmeldung: 15.01.2003
(73) Patentinhaber: ZF FRIEDRICHSHAFEN Aktiengesellschaft, 88038 Friedrichshafen (DE)
(72) Erfinder: BÖSL, Roland, 94034 Passau (DE)
(86) Internationale Anmeldenummer: PCT/EP2001/004273
(87) Internationale Veröffentlichungsnummer: WO 2001/081887

(56) Entgegenhaltungen:
- EP-A- 0 897 107
- WO-A-97/28431
- US-A- 3 552 200
- US-A- 3 948 095

## Beschreibung

Die Erfindung bezieht sich auf eine Vorrichtung zur Messung der Gleichförmigkeit eines Fahrzeugreifens nach der im Oberbegriff von Anspruch 1 näher definierten Art. Die Laufruhe eines Fahrzeugs sowie der Verschleiß verschiedener Fahrzeugteile hängen von der Gleichförmigkeit bzw. Ungleichförmigkeit des Fahrzeugreifens ab. Auch Kraftschwankungen, die vom Reifen während des Fahrens verursacht werden, beeinflussen die Laufruhe des Fahrzeugs. Um die Qualität des Fahrzeugreifens beurteilen zu können, werden Fahrzeugreifen verschiedenster Messungen mit und ohne Belastung des Fahrzeugreifens geringen und sehr hohen Geschwindigkeiten unterzogen.

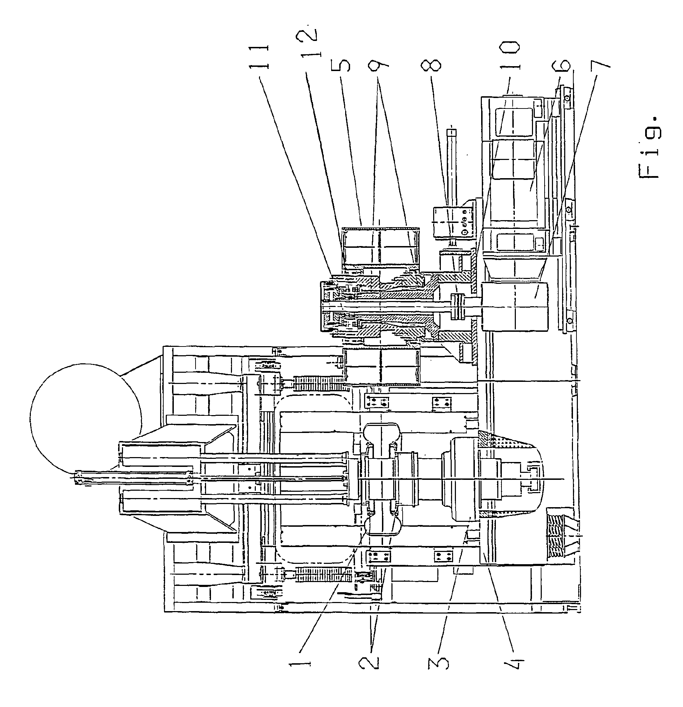

Die EP 0 897 107 A2 offenbart eine Vorrichtung zur Messung der Gleichförmigkeit eines Fahrzeugreifens, bei welcher eine Laufrolle so auf einem Rahmen verschiebbar ist, daß ein in einer Prüfvorrichtung befestigter und angetriebener Fahrzeugreifen mit der Laufrolle in Verbindung kommt. Die Laufrolle ist über als Wälzlager ausgebildete Drucklager in einem Schlitten befestigt. Der Fahrzeugreifen ist in einer Meßeinrichtung zur Messung von Reaktionskräften gehalten, wobei die in Fig. 5 dargestellte Meßeinrichtung wenigstens drei Meßwandler vorsieht, welche als Zweikomponenten-Kraftmeßele-mente auf Piezobasis ausgebildet sind. Mit dieser Art von Kraftmeßelementen können Kraftschwankungen im Radial-, Lateral- und Tangential-Bereich ermittelt werden. Eine exakte Messung der statischen Seitenkraft kann mit dieser in Fig. 5 offenbarten Vorrichtung zur Messung der Gleichförmigkeit eines Fahrzeugreifens nicht durchgeführt werden. Die in Fig. 1 bis 4 dargestellten Lösungen sind aus Gründen der mangelnden Steifigkeit für Hochgeschwindigkeitsmessungen ungeeignet.

Der vorliegenden Erfindung liegt die Aufgabe zugrunde, eine Vorrichtung zur Messung der Gleichförmigkeit eines Fahrzeugreifens zu schaffen, mit welcher alle auf die Radnabe wirkenden Kräfte auch bei hoher Drehzahl des Reifens erfaßt werden können.

Die Aufgabe wird mit einer, auch die kennzeichnenden Merkmale des Hauptanspruchs aufweisenden, gattungsgemäßen Vorrichtung zur Messung der Gleichförmigkeit eines Fahrzeugreifens gelöst.

Erfindungsgemäß wird ein zu prüfender Fahrzeugreifen oder auch ein Komplettrad in einer Haltevorrichtung aufgenommen, welche über Differenzkraft-Aufnehmer gelagert ist. Die Haltevorrichtung für den Fahrzeugreifen besteht vorzugsweise aus einem geteilten Meßfelgensystem, welches auch mit einer automatischen Maulweitenverstellung versehen sein kann, um eine rationelle Prüfung von Fahrzeugreifen in der Produktion zu ermöglichen. Die Differenzkraft-Aufnehmer sind vorzugsweise in einer Mehrkomponenten-Piezomeßnabe angeordnet, welche steif an das Maschinengestell angebunden ist und die Haltevorrichtung für den Fahrzeugreifen lagert. Eine antreibbare Laufrolle ist drehbar auf einem Schlitten gelagert, welcher verschiebbar auf einem Rahmen angeordnet ist. Die Laufrolle sowie der zu prüfende Fahrzeugreifen sind in horizontaler Richtung angeordnet, wodurch bei einem geteilten Meßfelgensystem ein einfacher Reifentransport in und von der Vorrichtung zur Messung der Gleichförmigkeit eines Fahrzeugreifens ermöglicht wird. Die Laufrolle ist über einen Antriebsmotor, dessen Drehzahl regelbar ist, antreibbar. Indem der Schlitten mit der Laufrolle gegen den zu prüfenden Fahrzeugreifen gefahren wird, kann eine definierte Radlast eingestellt werden. Die Laufrolle ist in radialer Richtung über Radiallager, vorzugsweise Hydrolager, welche hydrostatisch oder hydrodynamisch ausgeführt sind, gelagert. Durch die Verwendung dieser Lager ist die Laufrolle in axialer Richtung beweglich. Die axiale Abstützung der Laufrolle erfolgt ausschließlich über ein entkoppeltes Axiallager, das sich in Kraftmeßzellen abstützt. Der Antriebsmotor der Laufrolle kann auch mit in axialer Richtung weichen Kupplungen von der Laufrolle entkoppelt sein, um die Seitenkräfte des Fahrzeugreifens nahezu reibungsfrei und ohne zu hohe Meßspitzen von den Kraftmeßzellen aufzunehmen. Der Durchmesser der Laufrolle ist vorzugsweise ähnlich Reifenprüfständen, welche mit einer Drehzahl von ca. 60 l/min arbeiten, ausgeführt. Dieser geringe Laufrollendurchmesser ermöglicht eine kurze Beschleunigungsphase der Laufrolle für die Prüfung des Fahrzeugreifens bei Hochgeschwindigkeit. Indem die Laufrolle nach Beschleunigen des Fahrzeugreifens vom Fahrzeugreifen zurückgezogen wird, können auch Unwuchtkräfte des frei drehenden Rades erfaßt werden. Somit können alle auf die Radnabe wirkenden Kräfte und Momente, d. h., alle Kräfte und Momente, welche aus Unwucht, Steifigkeitsschwankungen, Rundlauffehler oder Massendefekte resultieren, erfaßt werden. Durch die separate Messung der statischen Seitenkraft können auch Konus und Winkeleffekt mit hoher Genauigkeit gemessen werden. An die Vorrichtung zur Messung der Gleichförmigkeit eines Fahrzeugreifens können auch Meßeinrichtungen zur Messung der Geometrie des Fahrzeugreifens, wie z. B. Rundlauf und Planlauf, angebracht sein.

Weitere Merkmale sind der Figuren-Beschreibung zu entnehmen.

Die einzige Figur zeigt eine Vorrichtung zur Messung der Gleichförmigkeit eines Fahrzeugreifens, bei welcher ein Fahrzeugreifen 1 in einem geteilten Meßfelgensystem, welches aus zwei Meßfelgenhälften 2 besteht, aufgenommen wird. Das Meßfelgensystem kann mit automatischer Maulweitenverstellung ausgerüstet sein, um Fahrzeugreifen verschiedener Größe ohne Umrüsten des Meßfelgensystems prüfen zu können. Der Fahrzeugreifen 1 ist über die Meßfelgenhälften 2 in einer Mehrkomponenten-Piezomeßnabe 3 gelagert. Die Mehrkomponenten-Piezomeßnabe 3 ist am Maschinengestell 4 gehaltert. Die Piezomeßnabe 3 weist vorzugsweise vier Piezomeßelemente auf, von welchen jedes in drei Kraftrichtungen mißt. Die Laufrolle 5 wird von einem in seiner Drehzahl regelbaren Antriebsmotor 6 über ein Kegelgetriebe 7 und eine Kupplung 8, welche in axialer Richtung dämpfend ausgeführt ist, angetrieben. Die Laufrolle ist über zwei Radiallager 9 auf einem Schlitten 10, welcher verschiebbar auf dem Maschinengestell 4 angeordnet ist, gelagert. In axialer Richtung ist die Laufrolle 5 über Kraftmeßzellen 11 über ein Axiallager 12 gelagert. Die Kraftmeßzellen 11 können als DMS-Dose ausgeführt sein. Durch die Verwendung einer Piezomeßnabe 3, welche mit dem Fahrzeugreifen in Verbindung steht, und einer über Radiallager 9 gelagerten Laufrolle, welche sich in axialer Richtung über Kraftmeßzellen 11 abstützt, ist es möglich, eine Messung mit allen auf die Radnabe wirkenden Kräfte auch bis in die Bereiche der Reifenendgeschwindigkeiten durchzuführen.

### Bezugszeichen

- 1: Fahrzeugreifen
- 2: Meßfelgenhälfte
- 3: Piezomeßnabe
- 4: Maschinengestell
- 5: Laufrolle
- 6: Antriebsmotor
- 7: Kegelgetriebe
- 8: Kupplung
- 9: Radiallager
- 10: Schlitten
- 11: Kraftmeßzelle
- 12: Axiallager

## Patentansprüche

1. Vorrichtung zur Messung der Gleichförmigkeit eines Fahrzeugreifens (1), bei welcher eine Laufrolle (5) antreibbar und über Lager (9) drehbar gelagert ist, welche durch lineares Verschieben auf einem Rahmen (4) mit einem zu prüfenden Fahrzeugreifen (1) in Verbindung gebracht werden kann, wobei der Fahrzeugreifen (1) in einer Haltevorrichtung (2) gehalten ist, welche über Differenzkraftaufnehmer (3) gelagert ist, **dadurch gekennzeichnet, daß** die Laufrolle (5) in radialer Richtung über Radiallager (9) und in axialer Richtung über entkoppelte Axiallager, welche sich in Kraftmeßzellen (11) abstützen, gelagert ist.

2. Vorrichtung zur Messung der Gleichförmigkeit eines Fahrzeugreifens nach Anspruch 1, **dadurch gekennzeichnet, daß** der Fahrzeugreifen (1) in einem geteilten Meßfelgensystem (2) aufgenommen wird.

3. Vorrichtung zur Messung der Gleichförmigkeit eines Fahrzeugreifens nach Anspruch 1, **dadurch gekennzeichnet, daß** die Differenzkraftaufnehmer (3) als Mehrkomponenten-Piezokraftaufnehmer ausgebildet sind.

4. Vorrichtung zur Messung der Gleichförmigkeit eines Fahrzeugreifens nach Anspruch 1, **dadurch gekennzeichnet, daß** die Kraftmeßzellen (11) zur Messung der axialen Kräfte der Laufrolle (5) als DMS-Dose ausgebildet ist.

5. Vorrichtung zur Messung der Gleichförmigkeit eines Fahrzeugreifens nach Anspruch 1, **dadurch gekennzeichnet, daß** die Radiallager (9) der Laufrolle (5) als Hydrolager ausgebildet sind.

6. Vorrichtung zur Messung der Gleichförmigkeit eines Fahrzeugreifens nach Anspruch 1, **dadurch gekennzeichnet, daß** der Antrieb (6) der Laufrolle (5) über Kupplungen (8) mit der Laufrolle verbunden ist, welche in axialer Richtung erzeugte Schwingungen des Antriebs dämpfen.

## Claims

1. Device for measurement of the uniformity of a vehicle tire (1) featuring a driveable caster (5), which is supported in bearings (9) and through linear displacement on a frame (4) can be made to establish a connection with a vehicle tire (1) to be tested, with the vehicle tire (1) being retained in a holding device (2) supported by differential force sensors (3), **characterized in that** the caster (5) is supported in radial direction by radial bearings (9) and in axial direction by decoupled thrust bearings supported in force gages (11).

2. Device for measurement of the uniformity of a vehicle tire according to claim 1, **characterized in that** the vehicle tire (1) is contained in a split-rim measuring system (2).

3. Device for measurement of the uniformity of a vehicle tire according to claim 1, **characterized in that** the differential force sensors (3) are designed as multicomponent piezoelectic force sensors.

4. Device for measurement of the uniformity of a vehicle tire according to claim 1, **characterized in that** the force gages (11) for measurement of the axial forces of the caster (5) are designed as wire strain gages (WSG).

5. Device for measurement of the uniformity of a vehicle tire according to claim 1, **characterized in that** the radial bearings (9) of the caster (5) are designed as hydrobearings.

6. Device for measurement of the uniformity of a vehicle tire according to claim 1, **characterized in that** the drive (6) of the caster (5) is linked to the caster by couplings (8) which dampen vibrations generated by the drive in axial direction.

## Revendications

1. Dispositif de mesure de l'uniformité d'un pneumatique d'un véhicule (1), dans lequel un galet (5) est logé en rotation à l'aide de roulements (9) et de façon à ce qu'il puisse être entraîné, ce galet pouvant être lié à un pneumatique d'un véhicule à contrôler (1) par déplacement linéaire sur un cadre (4), sachant que le pneumatique d'un véhicule (1) est maintenu dans un dispositif de retenue (2), celui-ci étant logé à l'aide de capteurs de force différentielle (3), **caractérisé en ce que** le galet (5) est logé en sens radial à l'aide de roulements radiaux (9) et en sens axial à l'aide de roulements axiaux découplés, ceux-ci étant supportés dans des cellules dynamométriques (11).

2. Dispositif de mesure de l'uniformité d'un pneumatique d'un véhicule selon la revendication 1, **caractérisé en ce que** le pneumatique d'un véhicule (1) est contenu dans un système de jantes de mesure divisé (2).

3. Dispositif de mesure de l'uniformité d'un pneumatique d'un véhicule selon la revendication 1, **caractérisé en ce que** les capteurs de force différentielle (3) sont réalisés en tant que récepteur piézo-électrique à plusieurs composants.

4. Dispositif de mesure de l'uniformité d'un pneumatique d'un véhicule selon la revendication 1, **caractérisé en ce que** les cellules dynamométriques (11) de mesure des forces axiales du galet (5) sont réalisées en tant que boîte dynamométrique à jauges de contrainte.

5. Dispositif de mesure de l'uniformité d'un pneumatique d'un véhicule selon la revendication 1, **caractérisé en ce que** les roulements radiaux (9) du galet (5) sont réalisés en tant que paliers hydrauliques.

6. Dispositif de mesure de l'uniformité d'un pneumatique d'un véhicule selon la revendication 1, **caractérisé en ce que** le dispositif d'entraînement (6) du galet (5) est lié au galet par l'intermédiaire d'embrayages (8), ceux-ci amortissant des vibrations du dispositif d'entraînement générées en sens axial.
